# EUROPÄISCHE PATENTSCHRIFT

(11) **EP 0 944 466 B1**
(45) Veröffentlichungstag und Bekanntmachung des Hinweises auf die Patenterteilung: **04.07.2001**
(21) Anmeldenummer: 97954351.9
(22) Anmeldetag: 03.12.1997
(51) Int. Cl.: B29C 45/56, B29C 45/57

(54) **VERFAHREN ZUR HERSTELLUNG VON SPRITZLINGEN**
PROCESS FOR MANUFACTURING INJECTION MOULDINGS
PROCEDE DE FABRICATION DE PIECES MOULEES PAR INJECTION

(30) Priorität: 13.12.1996 DE 19651879
(43) Veröffentlichungstag der Anmeldung: 29.09.1999
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: EP9706759
(87) Internationale Veröffentlichungsnummer: WO9825751

(56) Entgegenhaltungen:
- EP-A- 0 348 129
- EP-A- 0 397 883
- WO-A-80/00814
- DE-B- 1 127 579
- PATENT ABSTRACTS OF JAPAN vol. 7, no. 81 (M-205), 5.April 1983 & JP 58 008622 A (HITACHI SEISAKUSHO KK), 18.Januar 1983,
- PATENT ABSTRACTS OF JAPAN vol. 14, no. 144 (M-951), 19.März 1990 & JP 02 009614 A (JAPAN STEEL WORKS LTD:THE), 12.Januar 1990,
- PATENT ABSTRACTS OF JAPAN vol. 14, no. 285 (M-987), 20.Juni 1990 & JP 02 088210 A (JAPAN STEEL WORKS LTD:THE), 28.März 1990,

## Beschreibung

Die Erfindung betrifft ein Verfahren zur Herstellung von Spritzlingen nach dem Oberbegriff des Anspruches 1.

Unter dem Begriff "Durchströmungsquerschnitt wird der beim Einspritzen der plastifizierbaren Masse jeweils tatsächlich von dieser Masse durchströmte Querschnitt je Abschnitt des Formhohlraums verstanden. Der Formhohlraum der Form umfaßt alle beim Einspritzen vom plastifizierten Material durchströmten Hohlräume der Form, also ggf. auch den Anguß.

Dem Oberbegriff liegt ein Verfahren zugrunde, das in Fachkreisen dem Spritzprägen gleichzusetzen ist. Diese Gleichsetzung ist zutreffend, wenn die Form vor dem Einspritzen der plastifizierten Masse bis auf einen Spalt geschlossen wird, in diesen Spalt die plastifizierte Masse vollständig eingespritzt wird und der Spalt dann unter Spritzprägen des Spritzlings geschlossen wird. Grundsätzlich besteht auch die Möglichkeit, beim Einspritzen die bereits geschlossene Form wieder zu öffnen oder die bereits aufgebrachte Kraft zum Zuhalten der Form wieder zu verringern. Dieses Verfahren wird eingesetzt, um z.B. dünnwandige Teile wie CD's herzustellen, da es hier mitunter Schwierigkeiten bereitet, durch einen normalen Einspritzvorgang die plastifizierbare Masse bis in die letzten Winkel des Formhohlraums zu pressen.

Nach dem Einspritzen der plastifizierten Masse wird diese zur Formgebung des Spritzlings gekühlt. In dieser Abkühlphase treten zwangsläufig Schwindungen der Masse, wie z.B. eines flüssigen Kunststoffs auf, die üblicherweise durch eine Nachdruckphase mit Hilfe der Plastifizierschnecke ausgeglichen werden. Dazu wird die Plastifizierschnecke während der Nachdruckphase entsprechend einem vorgegebenen Profil unter Druck gehalten. Typischerweise sieht dieses Druckprofil so aus, daß nach dem Wechsel von der Einspritzphase in die Nachdruckphase der höchste Nachdruck eingestellt wird, um dann zum Ende der Nachdruckphase hin immer geringer zu werden. Der Verlauf des Druckprofils leitet sich aus dem materialabhängigen Verlauf der Volumenschwindung unter Druck und Temperatur gemäß dem für jedes Material typischen pVT-Diagramm während der Abkühlphase ab.

Diese Verfahren sind für die Formgebung üblicher Formteile hinlänglich bekannt, Probleme ergeben sich jedoch, wenn das Formteil Bereiche mit unterschiedlichen Durchströmungsquerschnitt aufweist, so daß Anschnitte oder Angüße in der Abkühlphase so früh versiegeln, daß der Nachdruck in diesem Bereich nicht geregelt aufrecht erhalten werden kann.

Aus dem DE-U 88 06 805 ist ein Spritzgießwerkzeug bekannt, bei dem eine zusätzliche Bewegung des Spritzgießwerkzeugs von der Schließbewegung abgeleitet wird. Diese Bewegung erfolgt kurz vor dem Abkühlen und damit vor dem Versiegeln des ganzen oder von Teilen des Spritzlings. Dabei wird ein Spalt im Spritzgießwerkzeug verklein_ert und das Material aus der Mitte in zwei randständige Formhohlräume gepreßt. Ergänzend kann diese Bewegung auch durch ein gesondertes Druckmittel erfolgen. Dies ist damit einem Spritzprägen gleichzusetzen, ohne daß der Nachdruck hierdurch geregelt wird.

Aus der DE-AS 11 27 579 ist es bekannt, den Nachdruck vom Plastifizierzylinder ausgehend so zu beeinflussen, daß zwar noch in die offene Form eingespritzt wird, diese dann jedoch während des Einspritzens geschlossen wird, wobei sichergestellt sein soll, daß ständig so viel Material vom Plastifizierzylinder weiter eingespritzt wird, daß die Düse nicht verschließt. Es soll weiterhin ein einstellbarer Nachdruck von der Düse her in an sich bekannter Weise aufgebracht werden. Es wird auch vorgeschlagen, die Form nicht ganz bis zu ihrer Anschlagstellung zu schließen, um die Bildung von Lunken und Einfallstellen zu verhünten. Des Formhohlraum verfügt allerdings nicht über vorseitig versiegelnde Abschnitte, die Abschnitte mit größerem Durchströmungsquerschnitt vom durch die Spritzgreßeinheit aufgebrachten Nachdruck vorseitig trennen. Weiterhin ist der Nachdruck lediglich "einstellbar veränderlich". Ein geregeltes Zusammenfahren liegt nicht vor, so daß eine Überlagerung eines geregelten Nachdrucks innerhalb der Spritzgießform nicht vorgenommen wird.

Aus der japanischen Offenlegungsschrift 58 008622 ist es bekannt, Material über eine Spritzgießeinheit in einen Formhohlraum einzuspritzen. Das Einspritzen selbst erfolgt bei geschlossener Form. Ein Teil der Formwandung ist jedoch beweglich, so daß nach Aufbringen des Nachdrucks die Größe des Formhohlraums noch beeinflußt werden kann. Der Nachdruck wird jedoch durch die Spritzgießeinheit aufgebracht. Von einer Regelung des Nachdrucks sowohl spritzgießseitig als auch durch das bewegliche Teil innerhalb der Spritzgießform ist nicht die Rede.

Aus der EP 348 129 A2 ist es bekannt, in der Spritzgießform vor dem Einspritzen ein Vakuum zu erzeugen. Das Material wird dann mit einem Druckstoß eingespritzt, so daß es nicht einmal an der Oberfläche zu einer frühzeitigen Verfestigung kommt. Die Düse wird dann verschlossen und eine Regelung des Nachdrucks erfolgt nur formschließseitig. Eine beidseitige Beeinflussung des Formhohlraums durch einen geregelten Nachdruck ist nicht vorhanden.

Ausgehend von diesem Stand der Technik liegt der Erfindung die Aufgabe zugrunde, auch bei komplizierten Teilen in der Nachdruckphase eine zuverlässige Verteilung des Nachdrucks zu ermöglichen.

Diese Aufgabe wird durch ein Verfahren mit den Merkmalen des Anspruches 1 gelöst.

Bei diesem Verfahren wird gezielt die Schwindung des plastifizierten Materials auch in dem sonst nach dem Versiegeln der Bereiche mit geringem Durchströmungsquerschnitt nicht mehr erreichbaren dickwandigen Bereich des Formhohlraums dadurch verwirklicht, daß die Formteilschwindung zumindest in diesen Bereichen durch eine geregelte Volumenänderung des Formhohlraums mittels der Formschließeinheit ausgeglichen wird. In den anderen Bereichen, die durch den von der Spritzgießeinheit aufgebauten Nachdruck erreichbar sind, wird die Formteilschwindung durch die Spritzgießeinheit, gegebenenfalls in Verbindung mit der Formschließeinheit oder dem Druckmittel ausgeglichen. Dadurch können einzelne Bereiche des Spritzlings gezielt hinsichtlich des Nachdruckes beeinflußt werden, wobei auch grundsätzlich die Möglichkeit besteht, in verschiedenen Bereichen den Nachdruck unterschiedlich verlaufen zu lassen und dadurch unter allmählichem Absenken des Nachdrucks die Entstehung von inneren Spannungen im Formteil durch Materialverschiebung bei zu kalter Schmelze zu vermeiden. Voraussetzung ist lediglich, daß sowohl die Spritzgießeinheit hinsichtlich des Nachdrucks als auch die Volumenänderung des Formhohlraums hinsichtlich der dafür erforderlichen Kraft regelbar ist.

Die den Nachdruck beeinflussenden Einheiten können unabhängig voneinander ein gemeinsames Druck- oder Kraftprofil erzeugen. Der Nachdruck wird damit durch ein Zusammenwirken von Spritzgießeinheit und Formschließeinheit und ggf. einem gesonderten Druckmittel gemäß Anspruch 2 geregelt. Im Extremfall ist sogar ein aktives Entlasten des Formhohlraums z.B. durch Zurückziehen der Schnecke möglich.

Besitzt das Formteil angußnahe Bereiche, die zwischen Anguß und angußfernen Bereichen liegen, so ist es unschädlich, wenn der angußnahe Bereich versiegelt, bevor der Nachdruck in den angußfernen Bereich entsprechend aufgebaut und abgesenkt worden ist. In den angußfernen Bereichen kann der Nachdruck durch die Formschließeinheit geregelt werden.

Kurzbeschreibung der Figuren
- Fig. 1: Eine schematische Darstellung einer Spritzgießmaschine mit zugehörigen Regelmöglichkeiten,
- Fig. 2: ein Ablaufdiagramm für ein schneckenabhängiges Prägen des Spritzlings,
- Fig. 3: ein Ablaufdiagramm für ein werkzeugwegabhängiges Füllen des Formhohlraums, sowie
- Fig. 4: eine schematische Darstellung eines nach dem Verfahren beaufschlagten Spritzlings,
- Fig. 5: eine Darstellung gemäß Fig. 4 unter zusätzlichem Spritzprägen.

Das Verfahren wird zur Herstellung von Spritzlingen eingesetzt, die auf einer Spritzgießmaschine zur Verarbeitung plastifizierbarer Massen hergestellt werden. Als plastifizierbare Massen kommen Kunststoffe, pulvrige Massen oder auch keramische Massen in Betracht. Das Verfahren kann grundsätzlich auf jeder Spritzgießmaschine durchgeführt werden, im folgenden wird jedoch Bezug genommen auf den Aufbau einer in den Zeichnungen dargestellten Kunststoff-Spritzgießmaschine.

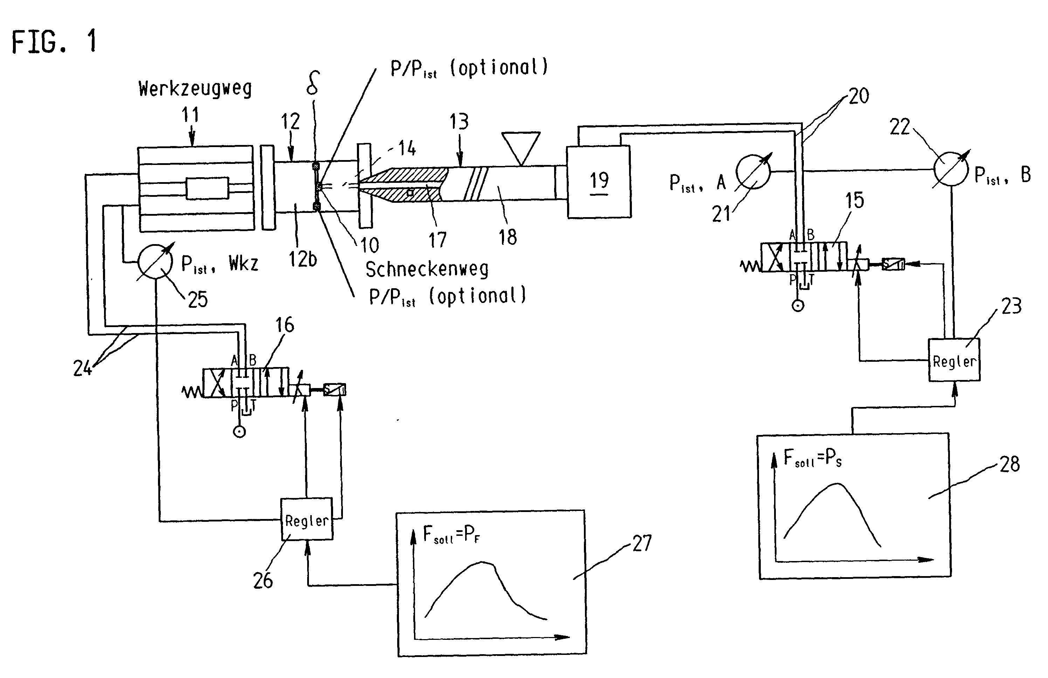

Eine derartige Spritzgießmaschine besitzt gemäß Fig. 1 eine Formschließeinheit 11, die üblicherweise zwischen ihren Formträgern eine Form 12 aufnimmt. Die Form 12 besteht gemäß dem Ausführungsbeispiel aus zwei Teilen 12b, die zwischen sich im geschlossenen Zustand einen Formhohlraum 10 einschließen. Der Formhohlraum ist über einen Anguß 14 von außen zugänglich, durch den die plastifizierbare Masse wie z.B. ein plastifizierter, thermoplastischer Kunststoff in den Formhohlraum gelangen kann. Die plastifizierbare Masse wird in einem Plastifizierzylinder 18 einer Spritzgießeinheit 13 vorzugsweise durch eine als Fördermittel ausgebildete Förderschnecke 17 plastifiziert und dem Angußkanal in entsprechend dosierter Menge zugeführt.

Zu Beginn des Formgebungsvorgangs überführt die Formschließeinheit 11 Teile 12b der Form 12 in eine Stellung, in der noch nicht die vollständige, für die Herstellung des Spritzlings erforderliche Zuhaltekraft, bedarfsweise sogar noch keine Zuhaltekraft, aufgebracht ist. In die so geschlossene oder fast geschlossene Form wird die plastifizierte Masse durch die Spritzgießeinheit in den Formhohlraum 10 eingespritzt. Nach Einspritzen der plastifizierten Masse wird die für die Herstellung des Spritzteils erforderliche Zuhaltekraft aufgebracht. Damit ist die Form zunächst gefüllt und nun muß die plastifizierte Masse abgekühlt werden, damit sich der Spritzling 12 bilden kann.

Um während des Abkühlens einem Schwinden des Spritzlings entgegenzuwirken, wird von der Spritzgießeinheit 13 ein geregelter Nachdruck aufgebracht. Hierzu wird die Einspritzeinheit 19 der Spritzgießeinheit 13 über ein Regelventil 15 angesteuert. Das Regelventil 15 ist mit den beiden Zylinderräumen der Einspritzeinheit 19 über zwei Leitungen verbunden, während die beiden weiteren Leitungen einerseits mit einer Druckquelle (Anschluß P) und andererseits mit einem Tank (Anschluß T) zur Rückführung eines hydraulischen Mediums verbunden sind. In den beiden Leitungen 20, die zur Spritzgießeinheit 13 führen, sind Druckfühler 21,22 vorgesehen, die die Druck-Istwerte P_{Ist,A}, P_{Ist,B} in den beiden Leitungen 20 aufnehmen. Der Differenzdruck der so ermittelten Druck-Istwerte entspricht einem Druck oder einer Kraft, den oder die die Förderschnecke auf den Formhohlraum 10 ausübt. Die Druck-Istwerte werden einem Regler 23 gemeldet, der den Druck gemäß einem Drucksollverlaufsdiagramm 28 auf vorgegebene Druck-Sollwerte P_{Soll} regelt. Selbstverständlich ergeben sich bei einer elektrich angetriebenen Spritzgießeinheit ähnliche Werte auf anderem Wege, was jedoch dem Fachmann geläufig ist.

Gleichzeitig wird nun aber auch der Nachdruck durch eine Veränderung des Volumens des Formhohlraums 10 z.B. formschließseitig durch die Formschließeinheit 11 geregelt beeinflußt. Dies wirkt sich insbesondere aber nicht nur auf angußferne Bereiche 10a des Formhohlraums mit großem Durchströmungsquerschnitt und die entsprechenden Bereiche des Spritzlings aus, die ansonsten durch vorzeitig versiegelnde Bereiche 10c des Formhohlraums mit geringem Durchströmungsquerschnitt vom durch die Spritzgießeinheit aufgebrachten Nachdruck abgeschnitten wären. Zu diesem Zweck wird die Formschließeinheit von einem Regelventil 16 über Leitungen 24 mit hydraulischem Medium versorgt. Auch dieses Regelventil ist einerseits mit einer Druckquelle (Anschluß P) und andererseits mit dem Tank (Anschluß T) verbunden. Über einen Druckfühler 25, vorzugsweise einen Werkzeuginnendrucksensor wird der Druck-Istwert P_{Ist,Wkz}, der auf dem Werkzeug lastet gemessen, der der Zuhaltekraft entspricht. Der Istwert wird an einen Regler 26 gemeldet, der dem Istwert einen Kraft-Sollwert P_{Soll} gemäß dem Kraft- oder Drucksollverlaufsdiagramm 27 nachführt. Anstatt die Volumenänderung nur über die Formschließeinheit aufzubringen, kann dies auch zusammen mit einem anderen Druckmittel wie einen Prägestempel 30 erfolgen, das gesondert und unabhängig von der Formschließeinheit regelbar ist.

Durch die regelbare Spritzgießeinheit in Verbindung mit der hinsichtlich ihrer Zuhaltekraft regelbaren Formschließeinheit, kann von zwei Seiten gezielt auch auf unterschiedliche Bereiche des Formhohlraums 10 ein geregelter Nachdruck ausgeübt werden. Die tatsächlichen Nachdruckwerte am Spritzling können selbstverständlich auch über Werkzeuginnendruckfühler gemessen werden, wie in Fig. 1 durch die mit P/P Ist (optional) verwendeten Bezeichnung optional angedeutet. Geregelt wird in diesen Fällen wiederum an den Regelventilen 15,16.

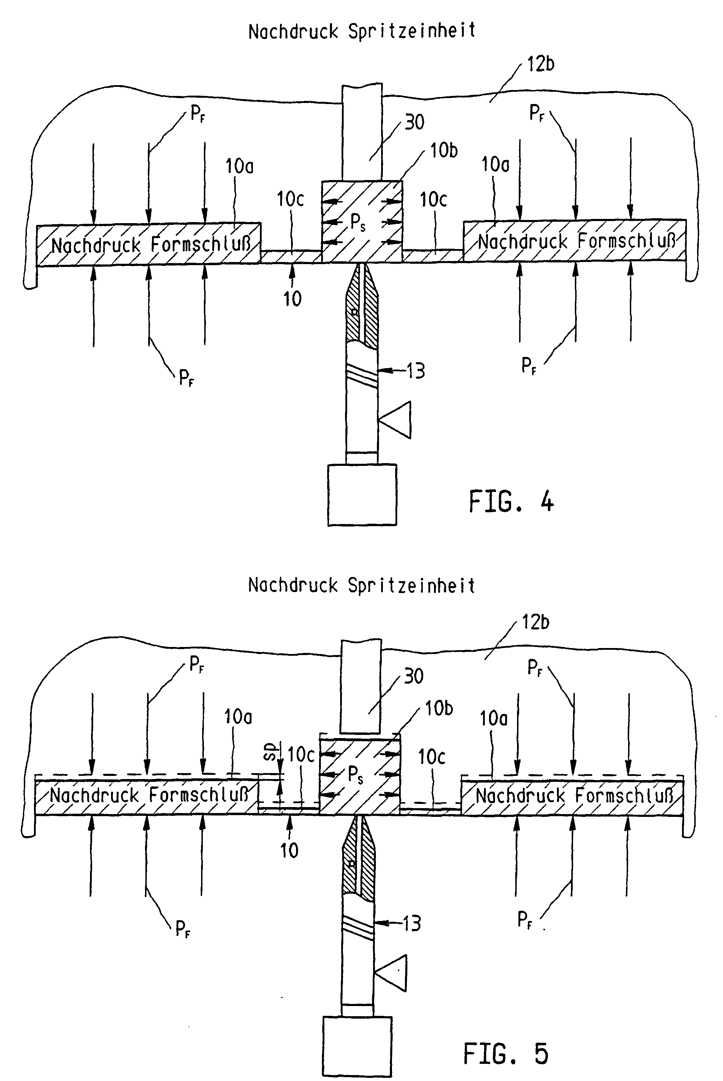

Ist der Nachdruck zumindest in angußfernen Bereichen 10a mit großem Durchströmungsquerschnitt durch das Aufbringen einer geregelten Zuhaltekraft mittels der Formschließeinheit 11 geregelt abgesenkt worden, kann der Spritzling entformt werden. In Fig. 4 ist ein Formhohlraum 10 dargestellt, der durch eine entsprechende zweiseitige Nachdruckregelung beeinflußt werden kann. Bei dem in diesem Formhohlraum hergestellten Spritzling handelt es sich z.B. um eine Kompakt-Disc, wobei der Bereich 10c die CD darstellt. Ausgehend von dem mittigen Anguß 14 ist zunächst ein angußnaher Bereich 10b mit großem Durchströmungsquerschnitt vorgesehen, der über einen angußnahen Bereich 10c mit geringem Durchströmungsquerschnitt in den angußfernen Bereich 10a mit wiederum großem Durchströmungsquerschnitt übergeht. Wird ein derartiges Teil nach dem im Stand der Technik bekannten Verfahren hergestellt, so versiegelt der Bereich 10c so früh, daß ein Nachdruck im angußfernen Bereich 10a nicht mehr regelgerecht aufgebracht werden kann. Die über den Anguß 14 dem Formhohlraum 10 zugeführte plastifizierte Masse wird daher bis in den angußnahen Bereich 10c durch die Spritzgießeinheit 13 mit einem geregelten Nachdruck beeinflußt. Damit wird auch der angußnahe, dickwandige Bereich 10b hinsichtlich des Nachdruckes von der Spritzgießeinheit 13 beeinflußt, wobei sich der Nachdruck P_{S} einstellt. Im angußfernen Bereich 10a hingegen, hat der von der Spritzgießeinheit aufgebrachte Nachdruck keinen Einfluß mehr. Aus diesem Grunde wird dort der Nachdruck durch eine Zuhaltekraftregelung über die Formschließeinheit 11 in Form des Nachdruckes P_{F} aufgebracht.

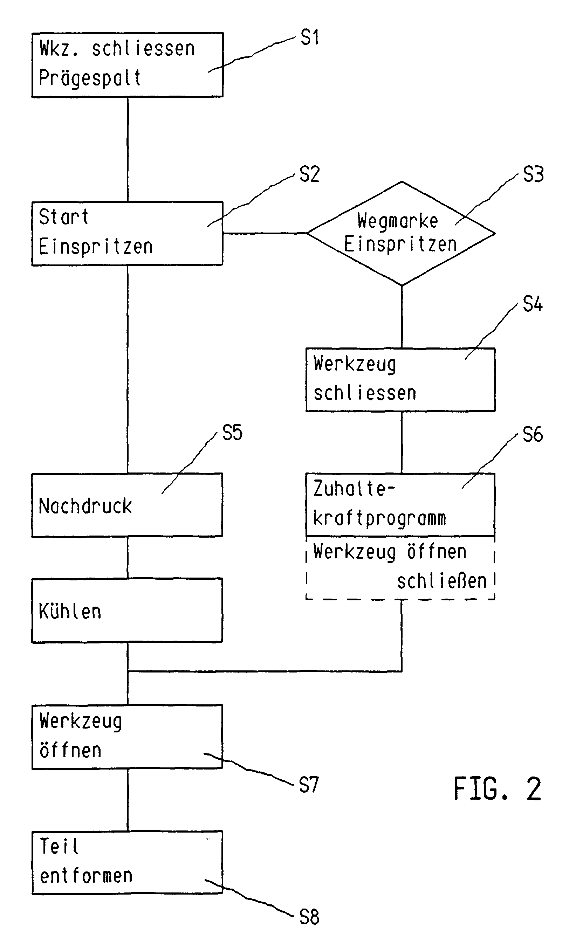

Das Einspritzen selbst erfolgt dergestalt, daß entweder in einen Spalt 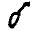 (Fig. 1) eingespritzt wird, der nach oder während des Einspritzvorgangs geschlossen wird. Dies kann z.B. dadurch erfolgen, daß das Werkzeug nicht ganz geschlossen oder nur bis zu einem Kraftbereich z.B. unterhalb der maximalen Zuhaltekraft geschlossen wird. Oder es besteht die Möglichkeit, die bereits geschlossene Form durch den Einspritzdruck beim Einspritzen des plastifizierten Materials wieder zu öffnen, wobei sich die Teile 12b der Form 12 wieder voneinander weg bewegen. Findet hierbei keine Öffnung statt, so kann beim Einspritzen zumindest die noch nicht vollständig aufgebrachte Zuhaltekraft verringert werden. Wird dann die für die Herstellung des Spritzlings 10 erforderliche Zuhaltekraft aufgebracht, führt die dabei auftretende Verformung zu einem dem Spritzprägen vergleichbaren Vorgang. Ein entsprechender Verfahrensablauf ist in Fig. 2 dargestellt.

In Schritt S1 wird das Werkzeug bis auf einen Prägespalt ds geschlossen. Sodann wird in Schritt S2 das Einspritzen der plastifizierten Masse gestartet. Erreicht die Förderschnecke 17 eine bestimmte Wegmarke gemäß der Abfrage im Schritt S3, so wird das Werkzeug in Schritt S4 geschlossen. An dieser Stelle setzen die beiden Möglichkeiten zur Regelung des Nachdrucks ein. Auf Seite der Spritzgießeinheit wird in Schritt S5 ein Nachdruckverlauf geregelt eingestellt. Formschließseitig startet ein Zuhaltekraftprogramm gemäß Schritt S6. Haben beide Programme letztlich zur Absenkung des Nachdrucks geführt, so wird nach erfolgter Kühlung das Werkzeug in Schritt S7 geöffnet und das Teil kann in Schritt S8 entformt werden.

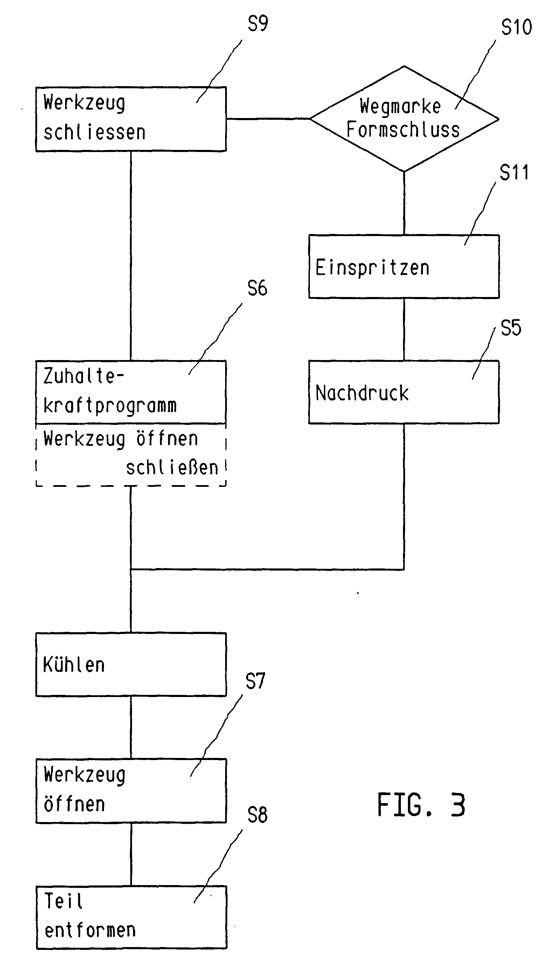

Alternativ besteht jedoch auch die Möglichkeit, daß, sobald bei der Schließbewegung die bewegliche Formhälfte der Form 12 einen bestimmten vorgegebenen Weg zurückgelegt hat, der Einspritzvorgang gestartet wird. Einen entsprechenden Verfahrensablauf stellt Fig. 3 dar, wobei mit dem vorausgegangenen Verfahrensablauf gemäß Fig. 2 vergleichbare Schritte mit gleichen Bezugszeichen versehen sind. Der Verfahrensablauf startet mit dem Vorgang Werkzeug schließen gemäß Schritt S9. Wird beim Formschluß eine bestimmte Wegmarke kurz vor Schließen der Form oder bei geringer Zuhaltekraft gemäß Schritt S10 erreicht, so startet der Einspritzvorgang gemäß Schritt S11. An dieser Stelle setzen wiederum die beiden Nachdruckregelungen in Form des spritzgießseitigen Nachdrucks gemäß Schritt S5 und des formschließseitigen Zuhaltekraftprogramms gemäß Schritt S6 ein. Nach Ende der Nachdruckregelung kann das Werkzeug dann in Schritt S7 wieder geöffnet werden und das Teil in Schritt S8 entformt werden.

Der Vorteil dieser Variante ist, daß die Zeit zum Positionieren des Formschlusses eingespart wird.

Vorzugsweise wird das zur Füllung des Formhohlraums erforderliche Volumen der plastifizierten Masse während des Einspritzvorgangs nicht vollständig eingespritzt und vor der Schnecke ein Massepolster für die spätere Regelung vorgesehen. Das Absenken des Nachdrucks erfolgt formschließseitig durch Absenken der maximalen Zuhaltekraft.

Bei der Volumenänderung des Formhohlraums 10 kann zugleich die Verbindung zwischen den Bereichen 10a mit großem Durchströmungsquerschnitt und den Bereichen 10c mit geringem Durchströmungsquerschnitt infolge des hierfür erforderlichen Weges ds (Fig. 5) der Form unterbrochen werden, gleichzusetzen einem Abstanzen der Anschnitte oder Angüsse.

In Figur 2 und 3 sind formschließseitig optional zum Zuhaltekraftprogramm gemäß Schritt S6 die dort gestrichelt eingerahmten Möglichkeiten gegeben, das Werkzeug programmäßig zu öffnen oder zu schließen. Dies kann z.B. dadurch geschehen, daß die Teile 12b der Form 12 beim Einspritzen infolge des Einspritzdrucks voneinander weg bewegt werden und hinterher der dabei auftretende Prägespalt 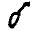 . in Fig. 1 oder ds in Fig. 5 wieder unter Einwirkung der Formschließeinheit 11 geschlossen wird.

Fig. 5 verdeutlicht schließlich, daß die Teile bis auf einen Prägespalt ds zusammengefahren werden können; die dann beim Spritzprägen erfolgende Bewegung kann auch dazu genutzt werden, zugleich die Verbindung zwischen den Bereichen 10a mit großem Durchströmungsquerschnitt und im Bereich 10c mit geringem Durchströmungsquerschnitt zu unterbrechen.

Ebenso können verschiedene Bereiche eines Formhohlraums auch verschiedene Spritzlinge formen, die verschiedenen Nachdruckprofilen spritzgießseitig und formschließseitig unterworfen werden.

## Patentansprüche

1. Verfahren zur Herstellung von Spritzlingen auf einer Spritzgießmaschine zur Verarbeitung plastifizierbarer Massen mit einer in einer Formschließeinheit (11) aufnehmbaren Form (12) mit wenigstens einem Formhohlraum (10), der einen Anguss (14) aufweist und in den die plastifizierbare Masse durch eine Spritzgießeinheit (13) eingespritzt wird, wobei das Verfahren die Schritte aufweist:
- Überführen der Teile (12b) der Form (12) in eine Stellung, in der noch nicht die vollständige, für die Herstellung des Spritzlings erforderliche Zuhaltekraft aufgebracht ist,
- Einspritzen der plastifizierten Masse in den Formhohlraum (121) der Form (12) durch den Anguss (14),
- Aufbringen der erforderlichen Zuhaltekraft,
- Aufbringen eines veränderlichen Nachdrucks durch die Spritzgießeinheit (13), gleichzeitiges Aufbringen eines veränderlichen Nachdrucks durch die Formschließeinheit unter Bewegung der Form (12),
- Entformen des Spritzlings (10),
dadurch gekennzeichnet, dass der Formhohlraum (10) Bereiche (10a) mit großem Durchströmungsquerschnitt und Bereiche (10c) mit demgegenüber geringen Durchströmungsquerschnitt aufweist, wobei der geregelte Nachdruck einerseits bis in angussnahe Bereiche (10c) mit geringem Durchströmungsquerschnitt durch die Spritzgießeinheit und andererseits sowohl in den angussnahen Bereichen, insofern überlagert mit dem von der Spritzgießeinheit (13) aufgebrachtem, geregelten Nachdruck, als auch in den angussfernen Bereichen (10a) mit großem Durchströmungsquerschnitt durch die Formschließeinheit (11) gemäß einem Zuhaltekraftprofil unter geregelter Volumenveränderung des Formhohlraums erzeugt wird.

2. Verfahren nach Anspruch 1, dadurch gekennzeichnet, daß eine zusätzliche Volumenänderung des Formhohlraums (10) mittels eines gesondert regelbaren Druckmittels (30) erfolgt.

3. Verfahren nach Anspruch 1, dadurch gekennzeichnet, daß die Teile (12b) der Form (12) beim Einspritzen infolge des Einspritzdruckes voneinander weg bewegt werden.

4. Verfahren nach Anspruch 1, dadurch gekennzeichnet, daß beim Einspritzen die noch nicht vollständig aufgebrachte Zuhaltekraft gemäß einem Zuhaltekraftprofil verändert wird.

5. Verfahren nach Anspruch 1, dadurch gekennzeichnet, daß beim Aufbringen der erforderlichen Zuhaltekraft zumindest teilweise ein Spritzprägen des Spritzlings (10) erfolgt.

6. Verfahren nach Anspruch 1, dadurch gekennzeichnet, daß, sobald der bewegliche Teil der Form (12) beim Schließvorgang einen bestimmten vorgegebenen Weg zurückgelegt hat, das Einspritzen gemäß einem vorgegebenen Profil gestartet wird.

7. Verfahren nach Anspruch 1, dadurch gekennzeichnet, daß, sobald der bewegliche Teil der Form (12) beim Schließvorgang einen bestimmten vorgegebenen Weg zurückgelegt hat, das Aufbringen des Nachdrucks gemäß einem vorgegebenen Profil gestartet wird.

8. Verfahren nach Anspruch 1, dadurch gekennzeichnet, daß das zur Füllung des Formhohlraums erforderliche Volumen der plastifizierbaren Masse während des Einspritzens nicht vollständig eingespritzt wird und daß der Nachdruck über die Spritzgießeinheit unter Zufuhr des Restvolumens geregelt wird.

9. Verfahren nach Anspruch 1, dadurch gekennzeichnet, daß der Nachdruck zumindest in angußfernen Bereichen (10a) mit großem Durchströmungsquerschnitt mittels der Zuhaltekraft in Abhängigkeit eines jeweiligen von einem Forminnendrucksensor ermittelten Forminnendruck geregelt wird.

10. Verfahren nach Anspruch 1, dadurch gekennzeichnet, daß bei der Volumenänderung des Formhohlraums (10) zugleich die Verbindung zwischen den Bereichen (10a) mit großem Durchströmungsquerschnitt und den Bereichen (10c) mit geringem Durchströmungsquerschnitt unterbrochen wird.

## Claims

1. Method of producing mouldings on an injection moulding machine for processing plasticisable substances, using a mould (12), which is accommodatable in a mould closing unit (11) and has at least one mould cavity (10), which has a sprue (14), and the plasticisable substance is injected into said cavity by means of an injection moulding unit (13), the method comprising the following steps:
- transferring the parts (12b) of the mould (12) into a position, in which the full clamping force required to produce the moulding is not yet applied,
- injecting the plasticized substance into the mould cavity (10) of the mould (12) through the sprue (14),
- applying the required clamping force,
- applying a variable holding pressure through the injection moulding unit (13),
- applying a variable holding pressure through the mould closing unit (11) in moving the mould (12),
- removing the moulding (10) from the mould,
characterised in that the mould cavity (10) having regions (10a) with a large-cross-section of flow and regions (10c) with a small cross-section of flow, by comparison, wherein the controlled holding pressure, on the one hand, is generated into regions (10c), close to the sprue and having a small cross-section of flow, by means of the injection moulding unit, and, on the other hand, is generated both in the regions close to the sprue, insofar overlaid with the close-loop controlled holding pressure applied by the injection moulding unit (13), and in the regions (10a), remote from the sprue and having a large cross-section of flow, by means of the mould closing unit (11), the mould (12) being moved according to a clamping force profile so as to change the volume of the mould cavity in a controlled manner.

2. Method according to claim 1, characterised in that an additional change in volume of the mould cavity (10) is effected by means of a separately controllable pressure means (30).

3. Method according to claim 1, characterised in that the parts (12b) of the mould (12) are moved away from each other during the injection process as a consequence of the injection pressure.

4. Method according to claim 1, characterised in that during the injection process the clamping force, which has not yet been fully applied, is changed according to a profile for such force.

5. Method according to claim 1, characterised in that, during the application of the required clamping force, the moulding (10) is at least partially injection-stamped.

6. Method according to claim 1, characterised in that, as soon as the movable part of the mould (12) has covered a certain prescribed distance during the closing operation, the injection according to a prescribed profile is started.

7. Method according to claim 1, characterised in that, as soon as the movable part of the mould (12) has covered a certain prescribed distance during the closing operation, the application of the holding pressure according to a prescribed profile is started.

8. Method according to claim 1, characterised in that the volume of the plasticisable substance required to fill the mould cavity is not fully injected during the injection process, and in that the holding pressure is controlled via the injection moulding unit so as to supply the residual volume.

9. Method according to claim 1, characterised in that the holding pressure, at least in regions (10a) remote from the sprue and having a large cross-section of flow, is controlled by means of the clamping force in dependence on an internal mould pressure determined in each case by an internal mould pressure sensor.

10. Method according to claim 1, characterised in that, during the change in volume of the mould cavity (10) the connection between the regions (10a) having a large cross-section of flow and the regions (10c) having a small cross-section of flow is interrupted at the same time.

## Revendications

1. Procédé de fabrication de pièces moulées par injection dans une presse à injection pour la transformation de matières plastifiables, comportant un moule (12) qui peut être reçu dans une unité de fermeture de moule (11) avec au moins une cavité de moulage (10), qui comporte un canal d'injection (14) et dans laquelle la matière plastifiable est injectée au moyen d'une unité de moulage par injection (13), le procédé comportant les étapes suivantes :
- transfert des parties (12b) du moule (12) dans une position dans laquelle la force de verrouillage totale, nécessaire à la fabrication de la pièce moulée n'est pas appliquée,
- injection de la matière plastifiée dans la cavité (121) du moule (12) à travers le canal d'injection (14),
- application de la force de verrouillage nécessaire,
- application d'une pression complémentaire variable au moyen de l'unité de moulage par injection (13),
- application simultanée d'une pression complémentaire variable au moyen de l'unité de fermeture de moule par déplacement du moule (12),
- démoulage de la pièce moulée (10),
caractérisé en ce que la cavité de moulage (10) présente des zones (10a) avec une grande section d'écoulement et des zones (10c) avec une section d'écoulement réduite par rapport aux premières, la pression complémentaire réglée étant produite d'une part jusque dans des zones (10c) proches du canal d'injection avec une section d'écoulement réduite par l'unité de moulage par injection, et d'autre part aussi bien dans les zones proches du canal d'injection, et donc superposée à la pression complémentaire réglée, appliquée par l'unité de moulage par injection (13), que dans les zones (10a) éloignées du canal d'injection avec une grande section d'écoulement, par l'unité de fermeture de moule (11), selon un profil de force de verrouillage, avec variation réglée du volume de la cavité de moulage.

2. Procédé selon la revendication 1, caractérisé en ce qu'il est procédé à une variation supplémentaire du volume de la cavité de moulage (10) au moyen d'un fluide sous pression (30) réglable séparément.

3. Procédé selon la revendication 1, caractérisé en ce que les parties (12b) du moule (12) sont éloignées l'une de l'autre lors de l'injection, par suite de la pression d'injection.

4. Procédé selon la revendication 1, caractérisé en ce que lors de l'injection, on fait varier la force de verrouillage, non encore appliquée totalement, selon un profil de force de verrouillage.

5. Procédé selon la revendication 1, caractérisé en ce que lors de l'application de la force de verrouillage nécessaire, il est procédé, au moins en partie, à un marquage par injection de la pièce moulée par injection (10).

6. Procédé selon la revendication 1, caractérisé en ce que l'injection est amorcée selon un profil donné, dès que la partie mobile du moule (12) a parcouru une distance donnée déterminée, lors de la fermeture.

7. Procédé selon la revendication 1, caractérisé en ce que l'application de la pression complémentaire est amorcée selon un profil donné, dès que la partie mobile du moule (12) a parcouru une distance donnée déterminée, lors de la fermeture.

8. Procédé selon la revendication 1, caractérisé en ce que le volume de la matière plastifiable, nécessaire pour remplir la cavité de moulage, n'est pas totalement injecté pendant l'injection, et en ce que la pression complémentaire est réglée, à travers l'unité de moulage par injection, par apport du volume résiduel.

9. Procédé selon la revendication 1, caractérisé en ce que la pression complémentaire est réglée, au moins dans les zones (10a) éloignées du canal d'injection, avec grande section d'écoulement, au moyen de la force de verrouillage, en fonction d'une pression interne au moule, déterminée par un capteur de pression interne au moule.

10. Procédé selon la revendication 1, caractérisé en ce que lors de la variation du volume de la cavité de moulage (10), la liaison est interrompue en même temps entre les zones (10a) de grande section d'écoulement et les zones (10c) de section d'écoulement réduite.
